# EUROPEAN PATENT APPLICATION

(11) **EP 0 620 682 A2**
(43) Date of publication of application: **19.10.1994**
(21) Application number: 94302606.2
(22) Date of filing: 13.04.1994
(51) Int. Cl.: H04N 5/92

(54) **Video signal transmitting system**

(30) Priority: 15.04.1993 JP 112331/93
(71) Applicant: VICTOR COMPANY OF JAPAN, LIMITED, Yokohama-Shi Kanagawa-Ken 221 (JP)
(72) Inventor: Yamada, Hiroshi, Shinagawa-ku, Tokyo (JP)
(74) Representative: Gladwin, Philip

(57) **Abstract**

In a video signal transmitting system for transmitting a video signal having a specific horizontal line containing an effective picture portion in which an original identification signal related to picture information of the video signal is inserted, the video signal transmitting system is characterized by that a loss of the original identification signal in transmission is protected as such that the lost original identification signal is substituted by another identification signal which is identical to or related to the original and is included in another effective picture portion of another horizontal line preceding to the specific horizontal line. Insertion of identical identification signal of such to a plurality of horizontal lines assures a further Protection from a longer dropout involving a series of horizontal lines which may caused due to a scratch made on a recording medium recorded with the video signal.

## Description

### BACKGROUND OF THE INVENTION

### Field of the Invention

The present invention generally relates to a video signal transmitting system in a television field. More specifically, the present invention is directed to a video signal transmitting system capable of compensating for an identification signal indicative of a sort of aspect ratio of transmitted or displayed picture.

### Description of the Prior Art

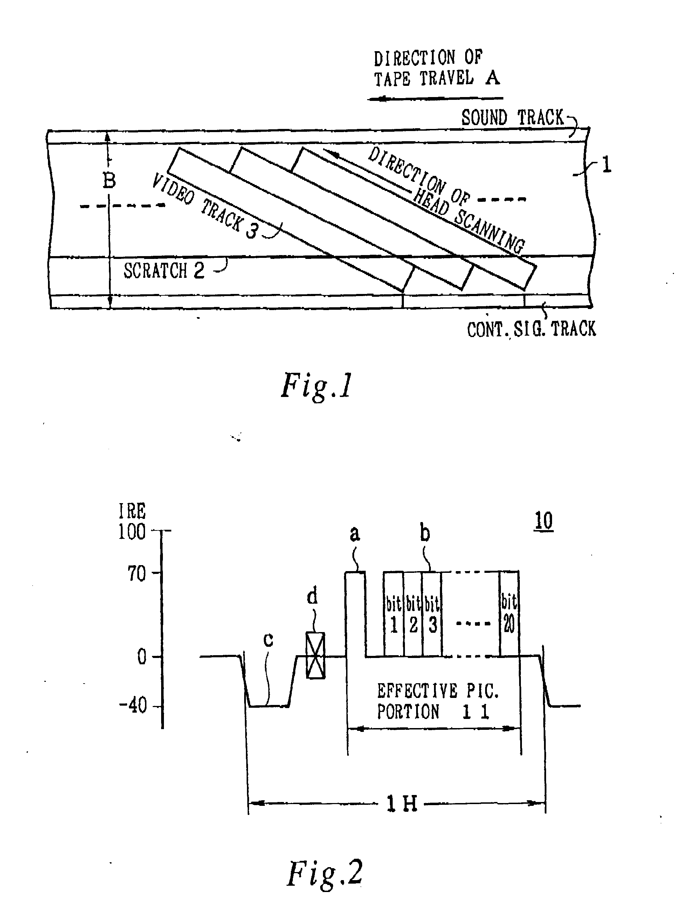

Referring now to Fig. 1, a description is made that a portion of a video track on a recorded magnetic tape is damaged by a scratch. Fig, 2 schematically represents a waveform of an identification signal. Aconventional video signal transmitting system will now be explained with reference to Figs. 1 and 2.

Very recently, various researches have been made in the video signal transmitting systems for high quality television picture of 16:9 aspect ratio, which are compatible with a conventional television system of 4:3 aspect ratio picture.

Then, the video signal received by these normal television receivers can be various types of signals respectively having different aspect ratio pictures (hereinafter simply referred to as "aspect ratio"), and if these various types of video signals could be automatically discriminated from each other based upon the aspect ratios, the normal television receivers may readily respond to the incoming video signals correspondingly with the proper television systems with different aspect ratios. To this end, there have been proposed such systems capable of realizing easy signal transmissions and extendable features that the identification signal for identifying at least the aspect ratio is inserted into the video signal. It should be noted that the source of the video signal may be a packaged video media such as tape reproduced on a VTR.

As one of these video signal transmission systems, the electronic Industries Association of Japan has proposed a document of provisional specifications "Specifications and Transfer Method of Video Aspect Ratio Identification Signal (II) (525-line system)" as EIAJ CPX-1204. In this provisional system, the various sorts of identification signals such as identification signals capable of identifying the sort of aspect ratio are inserted into the 20th horizontal(H) line and the 283rd horizontal (H) line in the vertical blanking period of the video signal. As illustrated in Fig. 2, this video signal 10 has a reference signal "a" used to the level adjustment in the effective picture portion 11 within the relevant 1 horizontal line, and the signal "b" subsequent to the reference signal "a", in which the identification signals related to various sorts of picture information are coded and transmitted during 20-bit time period (bit 1 to bit 20) indicated by either the amplitude of 70 IRE (status "1"), or the amplitude of 0 IRE (status "0"). In this drawing, a reference symbol "c" denotes the horizontal synchronization (sync) signal and a reference symbol "d" shows the color burst signal. In order to discriminate it easily from other identification signals used to the character multiplexing and the closed caption, the identification signal "b" is the signal with the relatively low bit rate. so that even when this identification signal "b" is utilized in recording/reproducing operations of VTR and the like, substantially no erroneous operation caused by signal deterioration will occur.

The code allocation about the identification signal "b" is given as follows:
This 20-bit data is arranged by the below-mentioned "WORD 0" to "WORD 2" and "CRC":
   "WORD 0" = 6 bits (bit 1 to bit 6),
   "WORD 1" = 4 bits (bit 7 to bit 10),
   "WORD 2" = 4 bits (bit 11 to bit 14),
   "CRC" = 6 bits (bit 15 to bit 20).

It should be noted that the above-mentioned "WORD 0" is subdivided into "WORD 0-A" = 3 bits (bit 1 to bit 3) and "WORD 0-B" = 3 bits (bit 4 to bit 6).

The data of "WORD 0" represents a basic parameter used to perform an automatic control on the signal receiving side (signal reproduction side), the data of "WORD 0-A" shows identification information about the video signal and other signals (audio signal etc.) which are simultaneously transmitted in conjunction with the video signal. The bit 1 of this data "WORD 0-A" indicates the content of the transmitted aspect ratio, in which when the bit 1 becomes a value "1", the picture aspect ratio is "full mode", namely 16:9)", whereas when the bit 1 becomes a value "0", the transmitted aspect ratio is "4:3". The bit 2 of the data "WORD 0-A" indicates the content of picture display format, in which when the bit 2 becomes a value "1", the picture display format means a so-called "letter box", whereas when the bit 2 becomes a value "0", the picture display format means the normal display format.

It should be understood that the transmitted aspect ratio of "full mode (16:9)" means such a video signal that the picture information about the aspect ratio of 16:9 with 525 lines is carried on the standard television signal system having the aspect ratio of 4:3 with 525 lines, and the picture display format of "letter box" means such a video signal constituted by that on the display screen of normal aspect ratio 4:3, a full picture (16:9) is displayed with upper and lower blank portions both having no picture information.

The above-described conventional video signal transmitting system and the identification signal for the video signals with the different aspect ratios are suitable for the NTSC television broadcasting system. Similarly, a so-called "PAL plus" system has been studied in Europe, which is compatible with the current PAL television broadcasting system, and is suitable for the previously mentioned "Specifications and Transfer Method of Video Aspect Ratio Identification Signal". In other words. this "PAL plus" system corresponds to 625/50/2:1 (interlace) system in which the identification signal related to the above-explained picture information is inserted into the 23rd horizontal line in the vertical blanking period.

On the other hand, the above-described identification signal "b" employed in the provisional system of EIAJ CPX-1204 "Transmission System and Identification Signal of Video Signals with Different Aspect Ratios" is designed to be a signal having a relatively low bit rate to minimize a malfunction due to a signal deterioration. However, even when such a low-bit-rate signal is utilized in signal recording/reproducing operations of VTR and the like, there still have a possibility of erroneous operations occurred in the below-mentioned cases which can not be compensated, thus the pictures of intended aspect ratio are not always reproduced stably, in other words, keeping a constant aspect ratio supposed to be defined by this identification signal "b" is not assured. As a consequence, there is a problem that picture may be reproduced with extremely unstable aspect ratios.

That is, the following cases have been unsolved problems.

### (1) A scratch is made on the magnetic tape 1.

As illustrated in Fig. 1, when the longitudinal scratch 2 is made on the magnetic tape 1 along the tape traveling direction "A", the scratch 2 crosses the video tracks 3, particularly, close to both ends of a video tracks 3 where a vertical blanking period including the identification signal "b" is recorded. When the identification signal "b" in video tracks are lost due to the scratch 2, it is no longer possible to recover it upon reproduction of the video signal 10 in the VTR. As a result, for example, the pictures cannot be reproduced under stable conditions with the aspect ratio defined otherwise by the identification signal "b".

### (2) Dropout occurrence

Although when a dropout happens to occur during reproduction of the video signal 10 by the VTR, a loss (dropout) of picture information may be compensated for by the well-known dropout compensating circuit, however a loss (dropout) of the identification signal "b" within the vertical blanking period cannot be compensated by this dropout compensating circuit (dropout compensator). As a result, when the video signal reproduced with such dropped out identification signal "b" is supplied to the television receiver. stable reproduction of pictures with the desired aspect ratio to be defined by the identification signal "b" is not possible of the pictures residing adjacent to i.e. before and after the occurrence of the dropout.

### SUMMARY OF THE INVENTION

The present invention has been made in an attempt to solve the above-described problems of the conventional video signal transmitting systems, and therefore, has an object to provide a video signal transmitting system capable of compensating for a loss of identification signal indicative of a sort of aspect ratio.

To achieve the above-described object, video signal transmitting systems according to the present invention may be realized as follows:
(1) In a video signal transmitting system, according to one aspect of the present invention, for transmitting a video signal with a specific horizontal line obtained by inserting an identification signal related to picture information into an effective picture portion thereof, the video signal transmitting system is characterized that a loss of the identification signal is protected by replacing the lost identification signal by another identification signal either equal to the identification signal or related to the identification signal and inserted into a horizontal line adjacent to the specific horizontal line.
(2) In a video signal transmitting system, according to another aspect of the present invention, for transmitting a video signal with a specific horizontal line obtained by inserting an identification signal related to picture information into an effective picture portion thereof, the video signal transmitting system is characterized that the identification signal is inserted into a plurality of horizontal lines in the vertical blanking period respectively during a recording operation, and when a dropout or the like involving the specific horizontal lines occurs during a reproducing operation, a loss of an identification signal in the relevant transmission lines is prevented by substituting any one of the identification signals in the plural horizontal lines where no dropout is involved, for the specific horizontal lines.
(3) In a video signal transmitting system, according to a further aspect of the present invention, for transmitting a video signal with a specific horizontal line obtained by inserting an identification signal related to picture information into an effective picture portion thereof, the video signal transmitting system is characterized that the identification signal is inserted into a plurality of horizontal lines in the vertical blanking period respectively, during a recording operation, and when a dropout or the like involving the specific horizontal lines occurs during a reproducing operation, a loss of an identification signal in the relevant transmission line is prevented by determining the dropout of the identification signal by utilizing the identification signals inserted in the plural horizontal lines which are unharmed by the dropout, and by substituting one of the unharmed identification signals for the dropped out identification signal thus determined.

Other objects and further features of the present invention will be apparent from the following detailed description with respect to preferred embodiments of the invention when read in conjunction with the accompanying drawings.

### BRIEF DESCRIPTION OF THE DRAWINGS

Fig. 1 exemplary shows a portion of a video track recorded on a magnetic tape is damaged by a scratch;
Fig. 2 is a waveform chart for showing an identification signal;
Fig. 3 is a schematic block diagram for representing a circuit arrangement of a video signal transmitting system according to an embodiment of the present invention, in which an identification signal is inserted into a video signal in a superimposing manner in the signal recording system thereof;
Fig. 4 is a schematic block diagram for indicating a circuit arrangement of the video signal transmitting system according to the embodiment of the present invention, in which a lost or dropped out identification signal is compensated in the signal reproducing system thereof: and
Fig. 5 is a timing chart for explaining operations of the signal recording and reproducing systems related to the video signal transmitting system shown in Fig. 3 and Fig. 4.

### DETAILED DESCRIPTION OF THE PREFERRED EMBODIMENT

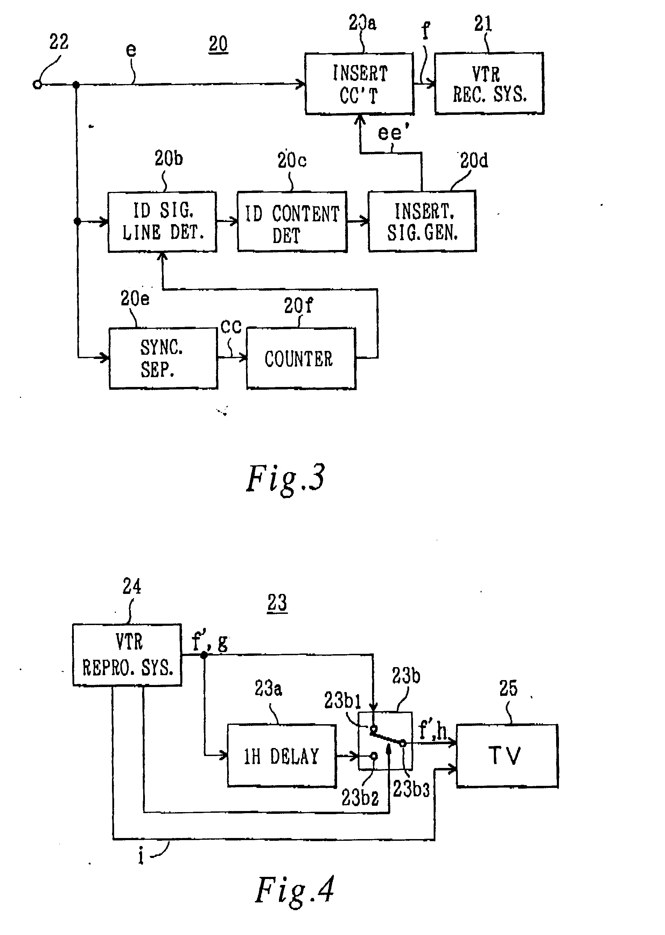

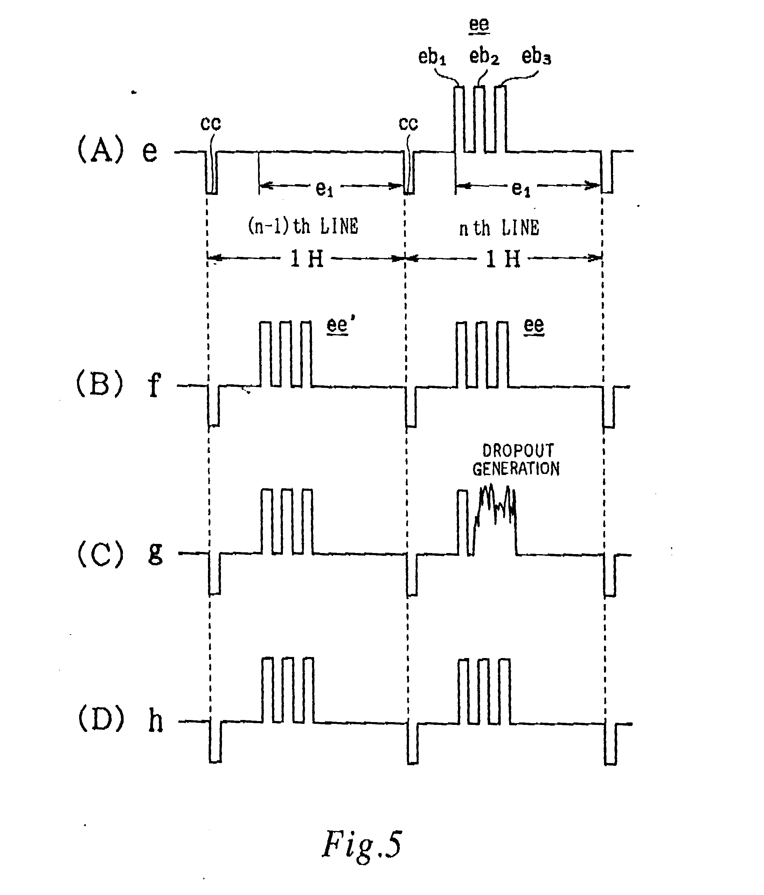

Referring now to Figs. 3 to 5, video signal transmitting system according to an embodiment of the present invention will be described. Fig. 3 is a schematic block diagram for representing a circuit arrangement of a signal recording system employed in the video signal transmitting system of the embodiment of the present invention, in which an identification (discrimination) signal is inserted into a video signal in a superimposing manner. Fig. 4 is a schematic block diagram for showing a circuit arrangement of a signal reproducing system employed in the above-described video signal transmitting system, in which a dropped out identification signal is compensated, Fig. 5 is a time chart for explaining operations of the signal recording/reproducing systems employed in this video signal transmitting system, as shown in Figs. 3 and 4.

As will be described later, the video signal transmitting system according to the present invention is summarized as follows:
In a video signal transmitting system for inserting an identification signal constructed of picture information such as an aspect ratio into an effective picture portion of a certain horizontal line (an "n" th line) in the vertical blanking period in the video signal, the same identification signals are inserted into at least two consecutive horizontal lines (e.g. a (n-1)th line and an (n)th line) when the video signal is recorded, and then a loss or dropout and the like caused during the reproduction of the video signal, can be compensated by such identification signals that are not lost nor dropped out. It should be noted that the compensation for the lost identification signal caused by a scratch of the tape is limited to such a case where this lost signal is detectable as a dropout.

A description will now be made of such a case that the signal recording system of VTR (shown in Fig. 3) and the signal reproducing system of VTR (shown in Fig. 4) according to the video signal transmitting system of the present invention, are applied to a signal recording/reproducing system of a VTR.

As illustrated in Fig. 3. a signal recording system 20 related to the video signal transmitting system according to the present invention, is provided at a preceding stage of the well-known VTR recording system 21. The signal recording system 20 is arranged by an inserting circuit20a, an identification (ID) signal line detecting circuit 20b, an identification signal (ID) content detecting circuit 20c, an insertion signal generating circuit 20d. Reference numeral 22 indicates a video signal input terminal for inputting a video signal "e" indicated in Fig. 5(A).

As represented in Fig. 5(A), none of the above-described ID signals is present in an effective picture portion "e₁" of an "(n-1)"th line of this video signal "e", whereas in addition to the ID signal used to identify the aspect ratio, various sorts of ID signals "ee" concerning picture information are present in the effective picture portion "e₁" of an "n"th line of the video signal "e". Although not shown in the drawing, the reference signal is inserted immediately before the ID signal "ee" in a similar manner to the above-explained video signal 10. For the sake of simplicity, only the first to third bits (namely, "ebᵢ" to "eb₃") among the ID signal "ee" composed of 20 bits are illustrated. Symbol "cc" denotes a horizontal sync signal in Fig. 5.

Then, operations of the above signal recording system 20 will now be explained.

In Fig. 3, the video signal "e" entered into the video signal input terminal 22 is supplied to the inserting circuit 20a, and the ID signal line detecting circuit 20b, and the sync separating circuit 20e, respectively.

The inserting circuit 20a inserts (rewrites) a replicated ID signal "ee"' (namely, an ID signal identical to the ID signal "ee") supplied from the insertion signal generating circuit 20d into the effective picture portion "eₗ" of the (n-1)th line of the video signal "e" during either a subsequent (one frame after) video frame period, or a horizontal line immediately preceding the (n) th line in the subsequent video field orframe. As a consequence, the inserting circuit 20a may output a video signal "f' (shown in Fig. 5(B) in which the ID signals "ee", and "ee"' have been inserted into the respective effective picture portions "eₗ" of the consecutive (n-1)th and (n)th lines, to an input side of the VTR's signal recording system 21 provided in a post stage. Assuming now that the (n)th line is the 20th horizontal line/the 283rd horizontal line, the (n-1)th line is the 19th horizontal line/the 282nd horizontal line.

The ID signal line detecting circuit 20b detects the ID signal "ee" of the (n)th line of the video signal "e" in synchronization with commencement of the counting "n" times the horizontal sync signal "e" in the sync separating circuit 20e, in response to a counting signal derived from the counter circuit 20f. Then, the ID signal line detecting circuit 20b outputs the ID signal "ee" of the (n)th line of the video signal "e" to the ID signal content detecting circuit 20c.

The ID signal content detecting circuit 20c detects the data content of the ID signal "ee" by comparing the respective data in an ID signal table built therein, with the data of the supplied ID signal "ee", and outputs this detected signal through an ID signal writing device (not shown in detail) to the insertion signal generating circuit 20d, and furthermore outputs this detected signal to a display device (not shown either) provided as required. By this arrangement, a user can confirm the respective video mode conditions of currently reproducing video signal by observing the displayed content on the display device. When the user wishes to change the content of the ID signal as a result of the confirmation, the user may change the content by manipulating the above-explained ID signal writing device. Then, this changed signal may be supplied to the insertion signal generating circuit 20d.

The insertion signal generating circuit 20d generates a replicated ID signal for one horizontal scanning period based upon the output signal supplied via the ID signal writing device circuit 20c. Then, the insertion signal generating circuit 20d outputs this replicated ID signal to the above-described inserting circuit 20a. In this insertion signal generating circuit 20d, in case that no change of the ID signal is instructed by the user, a replicated ID signal identical to the ID signal as "ee" is generated. When it is predicted that a time period of the dropout during the signal reproduction is longer than that of the (n-1)th line and (n)th line, it is apparent that the above-described replicated ID signal may be continuously generated for the predicted time period.

As explained above, the inserting circuit 20a can output such a video signal "e" during the current video frame period, in which the ID signal "ee" is inserted into only the effective picture portion of the (n)th line of the vertical blanking period, and also can output such a video signal "f' during the subsequent video frame period, in which-the ID signals "ee"' and "ee" are inserted into the respective effective picture. portions of the (n-1)th line and the (n)th line of the vertical blanking period.

It should be noted that since the above-described video signals "e" and "f' belong to the luminance (Y) signal produced by Y/C-separating the composite video signal, these video signals are frequency-multiplexed with the carrier chrominance signal derived from the well-known VTR chrominance signal recording system (mainly composed of an automatic color control (ACC) circuit, a frequency conversion circuit, and a low-pass filter circuit) after the video signals "e" and "f' have been processed in the well-known VTR luminance signal recording system (mainly composed of a pre-emphasis circuit,a clamp/clip circuit, a frequency modulating circuit, and a high-pass filtercircuit) employed on the VTR signal recording system 21. Then, after this frequency-multiplexed signal is amplified by the recording amplifier, the amplified signals are supplied to one pair of video heads (not shown in detail) mounted on a rotary drum (not shown either), so that this frequency-multiplexed video signal amplified by the recording amplifier is successively and continually recorded on the magnetic tape 1, as illustrated in Fig. 1.

Next, the signal reproducing system 23 related to the video signal transmitting system according to the present invention, is provided in a post stage of a VTR signal reproducing system 24 having a well-known circuit arrangement, as represented in Fig. 4. This signal reproducing system 23 is composed of a 1H delay circuit 23a and a switch 23b. This signal reproducing system 23 is represented by a typical dropout compensating circuit as shown, but it can be in different circuit arrangement from the one shown in Fig. 4. In this regard, a dropout compensation circuit often employed in conventional VTRs can be utilized as is in place of the signal reproducing system 23.

The signal reproducing system 23 shown in Fig. 4 can compensate for a loss (dropout) of the ID signal "ee" even when, as previously stated, either the scratch or the dropout occurs on the magnetic tape I while the VTR signal recorded on this magnetic tape 1 by the VTR signal recording system 21 is reproduced by the VTR signal reproducing system 24. This compensation is performed by using the replicated ID signal "ee"' inserted into the effective picture portion of the reproduced video signal in the (n-1)th line in the same video field period, as the ID signal "ee" for the (n)th line.

The switch 23b for constituting the above-described signal reproducing system 23 is arranged by fixed contacts 23b1, 23b2 and a movable contact 23b3. and is operated by a dropout detection signal conventionally produced (will be explained later) in and outputted from the VTR signal reproducing system 24. That is, when a dropout occurs, the movable contact 23b3 is moved from the fixed contact 23b1 to the fixed contact 23b2.

A television receiver 25 is capable of selecting the normal TV picture with the aspect ratio of 4:3 and the high-quality TV picture with the aspect ratio of 16:9, i.e., the picture size along the horizontal direction being longer than the picture size along the vertical direction.

Next, a description will now be made of operations of the signal reproducing system 23.

The magnetic tape 1 by the VTR signal recording system 21 indicated in Fig. 3, are reproduced by scanning the magnetic tape 1 with a pair of video heads, which are a part of the VTR signal reproducing system 24. This VTR signal reproducing system 24 has an arrangement similar to that of a well-known VTR signal reproducing system. The reproduction signal outputted from the video heads is amplified by a reproduction amplifier, and thereafter the amplified reproduction signal is supplied to a low-pass filter circuit (not shown in detail) and a high-pass filter circuit (not shown either) respectively. An output signal from the low-pass filter circuit is supplied to a well-known VTR chroma signal reproducing system (mainly composed of an equalizer amplifier circuit, a limiter circuit, a dropout detecting circuit, a dropout compensator a frequency demodulating circuit, and a de-emphasis circuit). It should be noted that all of these circuits are not shown in Fig. 4.

Thereafter, the reproduced video signal "i" (namely, Y/C separated chroma signal and luminance signals or a composite video signal obtained by frequency-multiplexing them each other), is supplied from the VTR signal reproducing system 24 to a video input terminal (not shown) of the television receiver 25.

A signal similar to the above-described video signal "f', which is obtained by extracting only the vertical blanking period from the luminance signal derived from the above-mentioned VTR luminance signal reproducing system, is supplied to the fixed contact 23b1 of the switch 23b and also to the 1 H (horizontal) delay circuit 23a respectively, which constitute the signal reproducing system 23. An output terminal of this 1H delay circuit 23a is connected to the other fixed contact 23b2 of the switch 23b. Next, an operation of the signal reproducing system 23 will be described.
(1) When no dropout occurs, a signal "f"' similar to the video signal "f' outputted from the VTR signal reproducing system 24 is directly supplied via the switch 23b to a control signal input terminal (not shown in detall) of the television receiver 25. As a result, the television receiver 25 detects the content of the ID signal "ee" which is inserted into the effective picture portion of the (n)th line of this signal "f"', and can display the picture information of the reproduced video signal "i" with a desired aspect ratio in response to this detected content.
(2) When a dropout occurs, the movable contact 23b3 of the switch 23b is changed from the fixed contact 23b1 to the other fixed contact 23b2 only under such a condition that the dropout detection signal derived from a conventional dropout detecting circuit of the VTR luminance signal reproducing system employed in the VTR signal reproducing system 24. is applied to this switch 23b. As a consequence, the ID signal "ee"' inserted into the effective picture portion of the (n-1)th line of the signal "g" outputted from the 1H delay circuit 23a is supplied via the switch 23b to the control signal input terminal of the television receiver 25 during the period in which information of the ID signal "ee" is lost. It should be noted here that the ID signal "ee"' in the (n-1)th line is not subjected to the dropout.

Accordingly, the television receiver 25 detects the content of this substituted ID signal "ee"' inserted into the effective picture portion of the (n-1)th line, and can display the picture information of the reproduced video signal "i" with the desired aspect ratio in response to the detection result. As a result, the lost ID signal "ee" caused by the dropout can be compensated by utilizing the dropout compensating circuit, and also the picture can be stably reproduced with the desired aspect ratio defined by the ID signal "ee"' which is always stable.

It should be understood that if both of the respective ID signals in the (n-1)th line and the (n)th line were lost at the same time due to a long dropout, the dropout compensation could not be realized. However, as it is well known that a dropout is generally an independent occurrence, thus a probability of such simultaneous loss is very small and therefore this case is rare and is no practical problem.

It should also be noted that in the above-described embodiment, the content of the picture is rewritten in a unit of either a single field period, or a 1H (horizontal) scanning line period. however, this does not pose a practical problem, since the picture information related to the ID signal such as the aspect ratio is not frequently changed in a unit of a single field period.

In the above description. the present invention is applied to the provisional system of EIAJ CPX-1204 "Specifications and Transfer Method of Video Aspect Ratio Identification Signal" suitable to the NTSC television broadcasting system. Similarly, as apparent from the foregoing explanation, the present invention is applicable to the "PAL plus" system (625/50/2:1 system) which is compatible with the standard PAL television broadcasting system and is similar and suitable in specifications to "Specifications and Transfer Method of Video Aspect Ratio Identification Signal".

I case of the above "PAL plus" system, the identification signals are inserted to the 23rd horizontal line in place of the 20th line in the foregoing description, so that the 23rd line is regarded as the (n)th line in the "PAL plus" system. Accordingly, with employment of the video signal transmission system according to the present invention. it is readily possible to compensate for lost identification signals by utilizing the dropout detecting signal of the dropout compensating circuit employed in recent VTRs. That is, when a video signal is recorded and reproduced in a VTR, in which the video signal contains the above-explained ID signal composed of 40- bit data in the effective picture portion of the 23rd horizontal line [(n)th line] within the vertical blanking period, the same ID signals are inserted into each of the 22nd and 23rd horizontal lines [(n-1)th line and (n)th line] during the signal recording operation. Thus. a loss of the initially mentioned identification signals caused by scratches and dropouts involved in the magnetic tape can be avoided.

Following description is directed to the above "PAL plus" system in which the ID signals primarily inserted into the 23rd line needs to be protected. Although a simultaneous loss of ID signals inserted in the two consecutive lines is very rare and not practically a problem as previously described, it is still possible to completely eliminate such a rare problem as follows.

The ID signals are inserted into a plurality of horizontal lines preferably as many as possible, as far as it does not disturb an operation of VTRs, within the vertical blanking period during the signal recording operation.

This requires a small modification of the present system that the number of horizontal lines to be inserted with the ID signals in recording and to be detected by the ID signal line detecting circuit 20b shown in Fig. 3, is changed correspondingly with a prospective length of dropout duration. When a dropout occurs over more than two horizontal line periods, for instance, over the 22nd and 23rd horizontal lines in reproduction, the ID signal inserted in the 21 st line which is unharmed is detected and outputted twice or more to substitute at least the lost ID signal in the 23rd horizontal lines. In this case. the 1 H delay circuit 23a in Fig. 4 may be made of memory device, so that such unharmed ID signal once detected is outputted repeatedly as many times as desired for coping with a longer dropout duration. For example, when a dropout occurs in three horizontal lines (namely, 21st to 23rd horizontal lines), the ID signal inserted in the 20th horizontal line which is unharmed may be used for the purpose.

Alternatively, in order to cope with the above mentioned longer dropout for more than two horizontal lines, the following method utilizing a majority circuit may be used. As an example, ID signals are inserted into each of plural and consecutive horizontal lines in the vertical blanking period during the signal recording operation. And supposing one of the ID signals inserted in the four consecutive horizontal lines is lost in the signal reproducing operation, the four consecutive horizontal lines containing the ID signals are fed successively to a 3/4th majority circuit, as a result of detecting 3 unharmed ID signals out of four inputted horizontal lines, the remaining one line which lacks the ID signal is determined, this enables the signal reproducing system 23 to output repeatedly the same ID signals for the four consecutive horizontal lines including the one lacking the ID signal. Accordingly, by employing such majority circuit, the present system can cope with the case that one out of four consecutive lines is subjected to a dropout of ID signal.

When two consecutive lines out of four lack their ID signals, the above 3/4th majority circuit can not cope with the problem. However, in this case. by connecting 2 units of such majority circuit in cascade, the lines of two consecutive lost ID signals can be determined. Suppose that a dropout caused in the 22nd and 23rd lines out of 5 lines from the 19th to 23rd lines. the preceding majority circuit determines the 22nd line as defective, and compensate for it. as a result, the 19th to 22nd lines without a dropout of ID signal are forwarded to the succeeding majority circuit. The succeeding majority circuit determines the defective 23rd line (the significant line in the "PAL plus" system) out of the 20th to 23rd lines inputted thereto by using the unharmed 20th to 22nd(compensated in the pre-stage) lines as the majority.

Accordingly, when the 22nd to 23rd lines are defective among the 19th to 23rd lines, i.e. 2 consecutive lines out of 5 are defective, the defective but significant 23rd line can be determined and compensated. It should be noted that a 3/4th majority circuit is referred to as an example in the foregoing explanation, but other type of majority circuit can be used in the similar manner to determine the defective lines obviously.

Thus, the video signal transmitting system of present invention allows to transmit a video signal reliably without a dropout of the ID signal which is initially inserted to an effective picture portion of a specific horizontal line of the video signal.

As mentioned in the foregoing, the video signal transmitting system according to the present invention is for reliably transmitting a video signal having a specific horizontal line containing an effective picture portion, to which an original ID signal related to picture information of the video signal is inserted. Specifically, the video signal transmitting system according to the present invention features that when a loss of the original ID signal occurs, the effective picture portion inserted with the original ID signal is rewritten (substituted) with the ID signal inserted in the line adjacent (preceding) to the specific horizontal line, which is identical to or related to the original ID signal. Therefore, when the present invention is applied to signal recording/reproducing operations of VTRs, a lost ID signal may be compensated for even under such conditions that a continuous scratch on the tape is caused along a direction of tape travel by the VTR mechanism, or a dropout occurs during the signal reproducing operation. When this ID signal is indicative of picture aspect ratio to instruct a TV receiver to display a picture accordingly, the TV receiver is assured to display the picture stably with the intended picture aspect ratio defined by thus protected ID signal.

Furthermore, in accordance with the video signal transmitting system of the present invention, particularly, the identical ID signals are inserted respectively into a plurality of horizontal lines in the vertical blanking period during the recording operation, and when dropout or the like involving the specific horizontal line occurs during the reproducing operation, any one of the ID signals inserted into the plural horizontal lines which are not subjected to the dropout may substitute the ID signal in the specific horizontal line. By doing this, even when these ID signals are continuously lost due to a dropout or the like over five to six horizontal lines, the video signal containing the effective picture portion in the specific horizontal line of which the included ID signal is readily protected, is reliably transmitted.

## Claims

1. A video signal transmitting system for transmitting a video signal having a specific horizontal line containing an effective picture portion where a first identification signal related to picture information of the video signal is inserted into the effective picture portion, said video signal transmitting system comprising:
means for inserting one of second and third identification signals into a horizontal line adjacent to said specific horizontal line where said second identification signal is identical to said first identification signal and said third identification signal is a signal related to said first identification signal, so that a loss of said first identification signal in a transmission line is substituted by said one of second and third identification signals.

2. A video signal transmitting system as claimed in Claim 1, in which said inserting means inserts a plurality of said one of second and third identification signals into a plurality of said horizontal line respectively in recording of said video signal on a recording medium, so that when a dropout of said first identification signal occurs upon reproducing said recording medium, said plurality of said one of second and third identification signals inserted into said plurality of said horizontal line and are unharmed due to the dropout, are made available for substituting the first identification signal subjected to said dropout.

3. A video signal transmitting system as claimed in Claim 2, in which said plurality of said one of second and third identification signals inserted into said plurality of said horizontal line and are unharmed due to the dropout, are utilized to determine the first identification signal subjected to said dropout.
